# EUROPEAN PATENT APPLICATION

(11) **EP 2 666 691 A1**
(43) Date of publication of application: **27.11.2013**
(21) Application number: 11856399.8
(22) Date of filing: 20.10.2011
(51) Int. Cl.: B60W 10/08, B60K 6/48, B60K 6/547, B60L 11/14, B60W 10/06, B60W 10/26, B60W 20/00, F01N 3/023, F02D 29/02

(54) **REGENERATION CONTROL DEVICE, HYBRID AUTOMOBILE, REGENERATION CONTROL METHOD, AND PROGRAM**

(30) Priority: 21.01.2011 JP 2011010564
(71) Applicant: Hino Motors Ltd., Tokyo 191-8660 (JP)
(72) Inventor: UENO, Hirotaka, Hino-shi Tokyo 191-8660 (JP)
(74) Representative: Skone James, Robert Edmund
(86) International application number: PCT/JP2011/074133
(87) International publication number: WO 2012/098744

(57) **Abstract**

The present invention effectively uses engine output in a "regeneration" process when an automobile is stopped. The automobile includes a regeneration control unit for, when regenerating a post-treatment device (20) while a hybrid automobile (1) is stopped, performing a high-load operation of an engine (10) by operating an electric motor (13) as a generator by the engine (10). A memory of a hybrid ECU (18) retains a power generation map in which are recorded the rotational speed of the engine (10) and/or a power generating torque when regenerating the post-treatment device (20), which correspond to the amount of particulate accumulation of the post-treatment device (20). The regeneration control unit constitutes a regeneration control device for determining, on the basis of the power generation map, the rotational speed and/or the power generating torque of the engine (10) when the engine (10) operates the electric motor (13) as a generator, which are corresponding to the amount of particular accumulation of the post-treatment device (20), when regenerating the post-treatment device (20) while the hybrid automobile (1) is stopping.

## Description

### {Technical Field}

The present invention relates to a regeneration control device, a hybrid vehicle, a regeneration control method, and a computer program.

### {Background Art}

A vehicle having a diesel engine includes a post-processing device for removing, for example, the particulate matter contained in the exhaust gas. Such a post-processing device needs periodic implementation of a process called "regeneration" in which the engine is operated under high load to burn off the particulate matter accumulated in a filter in order to prevent the filter from getting clogged (for example, see patent literature PTL1). For example, when the vehicle is stationary, the engine is usually on standby to start moving at an idling rotational speed and is under low load. To implement the process for "regeneration" in such a stationary vehicle, the engine is operated under high load by increasing the exhaust backpressure of the engine by activating an exhaust brake.

### {Citation List}

### {Patent Literature}

PTL1: JP 2006-275009 A

### {Summary of Invention}

### {Technical Problem}

As described above, during the "regeneration" while the vehicle is stationary, the output of the engine does not play any role and ineffective fuel consumption is continued when the engine is operated under high load by activating the exhaust brake and increasing the exhaust backpressure of the engine.

In light of the foregoing, an objective of the present invention is to provide a regeneration control device, a hybrid vehicle, a regeneration control method, and a computer program that can efficiently use the output of the engine during the process of "regeneration" while the vehicle is stationary.

### {Solution to Problem}

An aspect of the present invention relates to a regeneration control device. The regeneration control device of a post-processing device in a hybrid vehicle that includes an engine, an electric motor and a battery configured to supply electric power to the electric motor, that is capable of running by the engine or the electric motor or capable of running by a cooperation between the engine and the electric motor, that is capable of performing regenerative power generation by operating the electric motor as an electric power generator using the engine in order to charge the battery, and that includes the post-processing device for exhaust gas includes: regeneration control means for causing the engine to operate under high load by operating the electric motor as an electric power generator using the engine during regeneration of the post-processing device while the hybrid vehicle is stationary; and means for retaining information recording a rotational speed and/or electric power generation torque of the engine when the post-processing device is regenerated, the rotational speed and/or electric power generation torque corresponding to an amount of particulate accumulation of the post-processing device, wherein, when the post-processing device is regenerated while the hybrid vehicle is stationary, the regeneration control means determines, based on the information, the rotational speed and/or electric power generation torque of the engine corresponding to the amount of particulate accumulation of the post-processing device when the engine causes the electric motor to operate as an electric power generator.

Further, the regeneration control means may stop the electric motor from generating electric power and operate an exhaust brake when a value indicating a state of charge of the battery is equal to or more than a predetermined value, or exceeds the predetermined value.

Another aspect of the present invention relates to a hybrid vehicle. The hybrid vehicle of the present invention includes the regeneration control device of the present invention.

Another aspect of the present invention relates to a regeneration control method. The regeneration control method of a post-processing device in a hybrid vehicle that includes an engine, an electric motor and a battery configured to supply electric power to the electric motor, that is capable of running by the engine or the electric motor or capable of running by a cooperation between the engine and the electric motor, that is capable of performing regenerative power generation by operating the electric motor as an electric power generator using the engine in order to charge the battery, and that includes the post-processing device for exhaust gas includes: a regeneration control step for causing the engine to operate under high load by operating the electric motor as an electric power generator using the engine during regeneration of the post-processing device while the hybrid vehicle is stationary, wherein the regeneration control step includes a step for determining, when the post-processing device is regenerated while the hybrid vehicle is stationary, a rotational speed and/or electric power generation torque of the engine corresponding to an amount of particulate accumulation of the post-processing device when the engine causes the electric motor to operate as an electric power generator based on information recording a rotational speed and/or electric power generation torque of the engine corresponding to the amount of particulate accumulation of the post-processing device when the post-processing device is regenerated.

Further, the regeneration control step may include a step for stopping the electric motor from generating electric power and for operating an exhaust brake when a value indicating a state of charge of the battery is equal to or more than a predetermined value, or exceeds the predetermined value.

Still another aspect of the present invention relates to a computer program for causing an information processing apparatus to implement a function equivalent to a function of the regeneration control device.

### {Advantageous Effects of Invention}

According to the present invention, the output of the engine during the process of "regeneration" while the vehicle is stationary can efficiently be used.

### {Brief Description of Drawings}

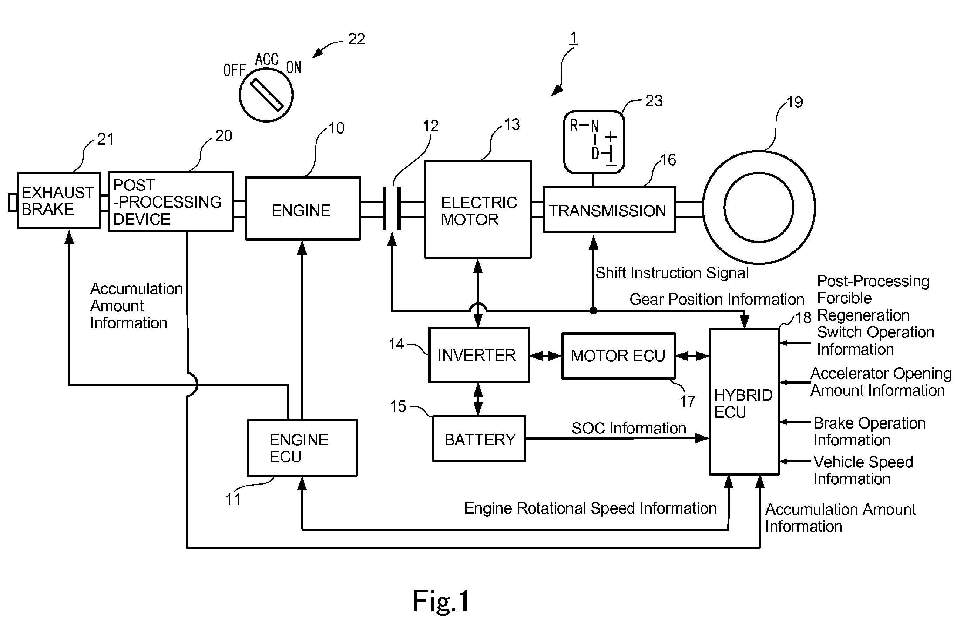

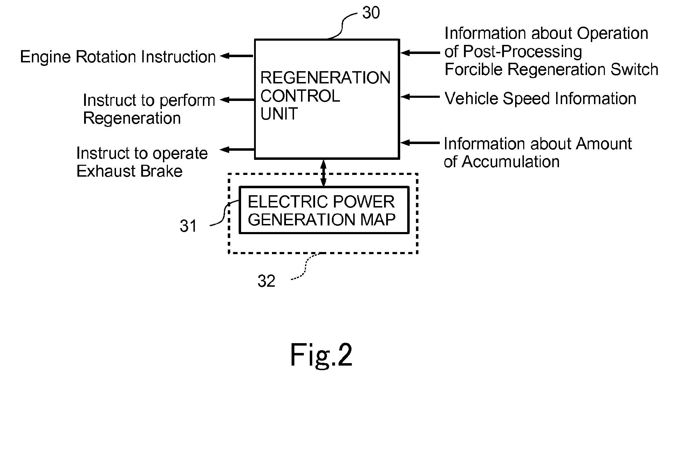

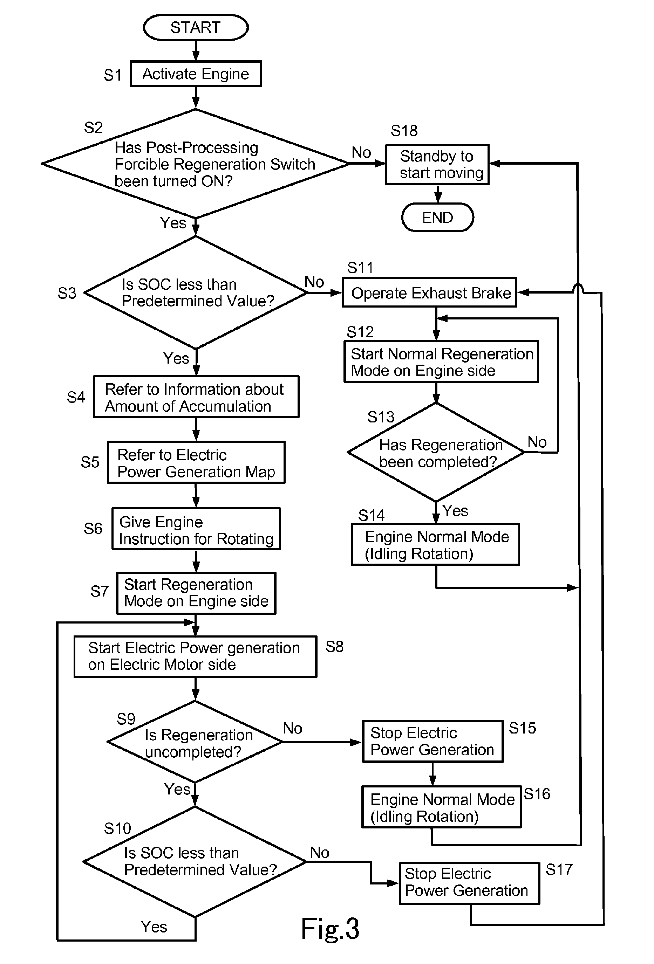

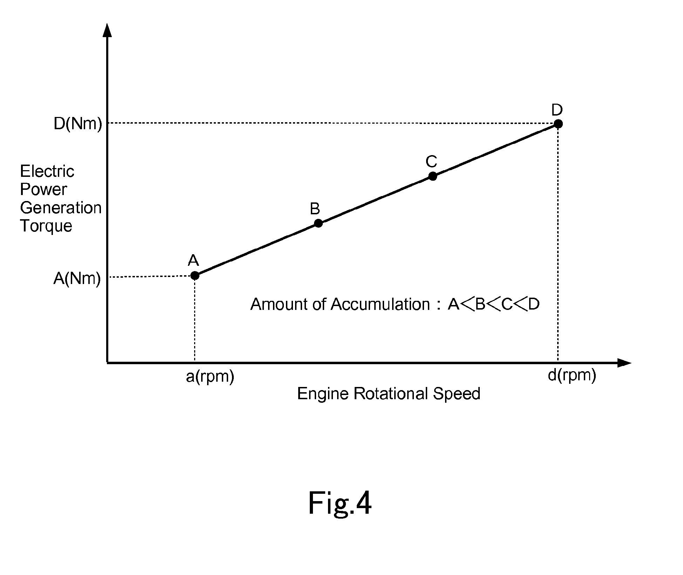

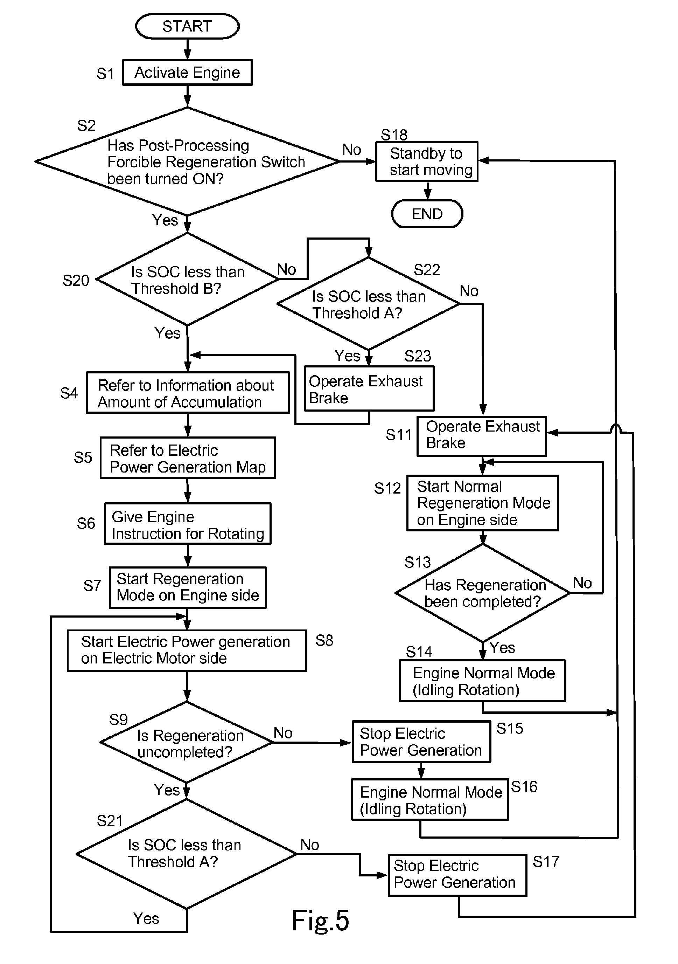

{Fig. 1} Fig. 1 is a block diagram for illustrating an exemplary structure of a hybrid vehicle according to an embodiment of the present invention.
{Fig. 2} Fig. 2 is a block diagram for illustrating an exemplary configuration of a function implemented in a hybrid ECU illustrated in Fig. 1.
{Fig. 3} Fig. 3 is a flowchart for illustrating a regeneration control process by a regeneration control unit illustrated in Fig. 2.
{Fig. 4} Fig. 4 is a view of an example of an electric power generation MAP included in the regeneration control unit in Fig. 2.
{Fig. 5} Fig. 5 is a flowchart for illustrating a regeneration control process by a regeneration control unit according to another embodiment.

### {Description of Embodiments}

Hereinafter, the hybrid vehicle according to an embodiment of the present invention will be described with reference to Figs. 1 to 4.

### {Outline}

A hybrid vehicle includes an engine, an electric motor, and a battery configured to supply electric power to the electric motor. The hybrid vehicle can run with the engine or the electric motor, or can run by the cooperation between the engine and the electric motor, and can perform the regenerative power generation for charging the battery by operating the electric motor as an electric power generator using the engine. Accordingly, in a hybrid vehicle according to the embodiment of the present invention, during the "regeneration" of a post-processing device while the vehicle is stationary, the electric motor is operated using the engine to perform regenerative power generation so that the output of the engine is converted into electric power and is efficiently used.

### {Embodiment of the present invention}

Fig. 1 is a block diagram for illustrating an exemplary structure of a hybrid vehicle 1. The hybrid vehicle 1 is an example of a vehicle.

The hybrid vehicle 1 includes an engine 10, an engine electronic control unit (ECU) 11, a clutch 12, an electric motor 13, an inverter 14, a battery 15, a transmission 16, an electric motor ECU 17, a hybrid ECU 18 (referred to as a regeneration control device in claims, and an internal memory 32 is referred to as means for retaining information in claims), a wheel 19, a post-processing device 20, an exhaust brake 21, a key switch 22, and a shift unit 23. The transmission 16 includes an automated mechanical/manual transmission, and is operated by the shift unit 23 including a drive range (hereinafter, referred to as a D (Drive) range). Incidentally, the automated mechanical/manual transmission is a transmission that can automatically perform a gear shifting operation while having the same structure as a manual transmission.

The engine 10 is an example of an internal combustion engine, and is controlled by the engine ECU 11. The engine 10 internally combusts gasoline, light oil, Compressed Natural Gas (CNG), Liquefied Petroleum Gas (LPG), alternative fuel, or the like in order to generate power for rotating a shaft and transmit the generated power to the clutch 12.

The engine ECU 11 is a computer working in coordination with the electric motor ECU 17 according to the instructions from the hybrid ECU 18, and controls the engine 10, for example, the amount of fuel injection and the valve timing. Further, the engine ECU 11 controls the exhaust brake 21 according to the instructions from the hybrid ECU 18. For example, the engine ECU 11 includes a Central Processing Unit (CPU), an Application Specific Integrated Circuit (ASIC), a microprocessor (micro-computer), a Digital Signal Processor (DSP), and the like, and internally has an operation unit, a memory, an Input/Output (I/O) port, and the like.

The clutch 12 is controlled by the hybrid ECU 18, and transmits the shaft output from the engine 10 to the wheel 19 through the electric motor 13 and the transmission 16. In other words, the clutch 12 mechanically connects the rotating shaft of the engine 10 to the rotating shaft of the electric motor 13 by the control of the hybrid ECU 18 in order to transmit the shaft output of the engine 10 to the electric motor 13. On the other hand, the clutch 12 cuts the mechanical connection between the rotating shaft of the engine 10 and the rotating shaft of the electric motor 13 so that the shaft of the engine 10 and the rotating shaft of the electric motor 13 can rotate at different rotational speeds from each other.

For example, the clutch 12 mechanically connects the rotating shaft of the engine 10 to the rotating shaft of the electric motor 13, for example, when the power of the engine 10 causes the electric motor 13 to generate electric power, when the driving force of the electric motor 13 assists the engine 10, and when the electric motor 13 starts the engine 10.

Further, for example, the clutch 12 cuts the mechanical connection between the rotating shaft of the engine 10 and the rotating shaft of the electric motor 13 when the engine 10 is stopped or is in an idling state and the hybrid vehicle 1 runs by the driving force of the electric motor 13, and when the hybrid vehicle 1 reduces the speed or runs on the downgrade and the electric motor 13 generates (regenerates) electric power while the engine 10 is stopped or is in an idling state.

Incidentally, the clutch 12 differs from a clutch operated by the driver's operation of a clutch pedal, and is operated by the control of the hybrid ECU 18.

The electric motor 13 is a so-called electric motor generator that supplies a shaft output to the transmission 16 by generating the power for rotating the shaft using the electric power supplied from the inverter 14, or that supplies electric power to the inverter 14 by generating the electric power using the power for rotating the shaft supplied from the transmission 16. For example, when the hybrid vehicle 1 gains the speed or runs at a constant speed, the electric motor 13 generates the power for rotating the shaft to supply the shaft output to the transmission 16 in order to cause the hybrid vehicle 1 to run in cooperation with the engine 10. Further, the electric motor 13 works as an electric power generator, for example, when the electric motor 13 is driven by the engine 10, or when the hybrid vehicle 1 reduces the speed or runs on the downgrade. In that case, electric power is generated by the power for rotating the shaft supplied from the transmission 16 and is supplied to the inverter 14 in order to charge the battery 15.

The inverter 14 is controlled by the electric motor ECU 17, and converts the direct voltage from the battery 15 into an alternating voltage or converts the alternating voltage from the electric motor 13 into a direct voltage. When the electric motor 13 generates power, the inverter 14 converts the direct voltage from the battery 15 into an alternating voltage and supplies the electric power to the electric motor 13. When the electric motor 13 generates electric power, the inverter 14 converts the alternating voltage from the electric motor 13 into a direct voltage. In other words, in such a case, the inverter 14 works as a rectifier and a voltage regulator for supplying a direct voltage to the battery 15.

The battery 15 is a secondary cell capable of being charged and discharged. The battery 15 supplies electric power to the electric motor 13 through the inverter 14 when the electric motor 13 generates power. Alternatively, the battery 15 is charged with the electric power generated by the electric motor 13 when the electric motor 13 generates electric power.

The transmission 16 includes an automated mechanical/manual transmission (not shown in the drawings) that selects one of a plurality of gear ratios (change gear ratios) according to the shift instruction signal from the hybrid ECU 18 in order to shift the change gear ratios and transmit the gear-shifted power of the engine 10 and/or of the electric motor 13 to the wheel 19. Alternatively, the transmission 16 transmits the power from the wheel 19 to the electric motor 13, for example, when the vehicle reduces the speed or runs on the downgrade. Incidentally, the automated mechanical/manual transmission can also shift the gear position to a given gear number by the driver's hand operation of the shift unit 23.

The electric motor ECU 17 is a computer working in coordination with the engine ECU 11 according to the instructions from the hybrid ECU 18, and controls the electric motor 13 by controlling the inverter 14. For example, the electric motor ECU 17 includes a CPU, an ASIC, a microprocessor (micro-computer), a DSP, and the like, and internally has an operation unit, a memory, an I/O port, and the like.

The hybrid ECU 18 is an example of a computer. For hybrid running, the hybrid ECU 18 obtains accelerator opening amount information, brake operation information, vehicle speed information, gear position information, engine rotational speed information, and State of Charge (hereinafter, referred to as SOC) information. Based on the obtained information, the hybrid ECU 18 controls the clutch 12, supplies the shift instruction signal in order to control the transmission 16, gives the instructions to the electric motor ECU 17 to control the electric motor 13 and the inverter 14, and gives the instruction to the engine ECU 11 to control the engine 10. Further, the hybrid ECU 18 gives instructions for implementing the process for "regeneration" to the engine ECU 11, the clutch 12, and the electric motor ECU 17 based on accumulation amount information (information about the amount of particulate accumulation) and post-processing forcible regeneration switch operation information (information about the operation of a post-processing forcible regeneration switch, the switch being not illustrated in the drawings) that is sent from the post-processing device 20. For example, the hybrid ECU 18 includes a CPU, an ASIC, a microprocessor (micro-computer), a DSP, and the like, and internally has an operation unit, a memory, an I/O port, and the like.

Incidentally, a computer program to be executed by the hybrid ECU 18 can be installed on the hybrid ECU 18 that is a computer in advance by being stored in a non-volatile memory inside the hybrid ECU 18 in advance.

The engine ECU 11, the electric motor ECU 17, and the hybrid ECU 18 are connected to each other, for example, through a bus complying with the standard of the Control Area Network (CAN) or the like.

The wheel 19 is a drive wheel for transmitting the driving force to the road surface. Incidentally, although only a wheel 19 is illustrated in Fig. 1, the hybrid vehicle 1 actually includes a plurality of the wheels 19.

The post-processing device 20 is for cleaning up the exhaust gas from the engine 10 and includes a sensor for detecting the amount of particulate accumulation (not illustrated in the drawings) to send the information about the amount of particulate accumulation that has been detected by the sensor to the hybrid ECU 18.

The exhaust brake 21 is positioned at an exhaust pipe of the engine 10 provided at the rear part of the post-processing device 20. Operating the exhaust brake 21 increases the resistance generated when the exhaust gas is emitted outside. This increases the friction of the engine 10 and thus can increase the effect of the engine braking. Further, the increase in the friction of the engine 10 can cause the engine 10 to operate under high load. This increases the temperature of the exhaust gas and thus facilitates the process for the regeneration of the post-processing device 20. Incidentally, operating the exhaust brake 21 means closing an electromagnetic valve (not illustrated in the drawings) inside the exhaust brake 21.

The key switch 22 is a switch that is turned ON/OFF, for example, by insertion of a key by the user at the start of drive. Turning ON the key switch activates each unit of the hybrid vehicle 1, and turning OFF the key switch 22 stops each unit of the hybrid vehicle 1.

As described above, the shift unit 23 is for giving the instructions from the driver to the automated mechanical/manual transmission in the transmission 16. When the shift unit 23 is at the D range, the gear shifting operation of the automated mechanical/manual transmission is automated.

Fig. 2 is a block diagram for illustrating an exemplary configuration of a function implemented in the hybrid ECU 18 executing a computer program. In other words, when the hybrid ECU 18 executes a computer program, the functions of a regeneration control unit 30 (referred to as regeneration control means in claims) and an electric power generation MAP 31 (referred to as information in claims) are implemented. Incidentally, the data of the electric power generation MAP 31 can previously be installed on the hybrid ECU 18 working as a computer by previously being stored in the memory 32 (referred to as means for retaining information in claims) that is non-volatile and is included in the hybrid ECU 18.

The regeneration control unit 30 inputs the information about the operation of a post-processing forcible regeneration switch (not illustrated in the drawings), the vehicle speed information, and the information about the amount of particulate accumulation, and outputs an engine rotation instruction, a regeneration control instruction, and an exhaust brake operation instruction to the engine ECU 11.

Next, the process for a regeneration control of the post-processing device 20 implemented in the hybrid ECU 18 executing a computer program will be described with reference to the flowchart in Fig. 3. Incidentally, a process from the "START" to the "END" in the flowchart illustrated in Fig. 3 is a cycle of the process and is repeated as long as the key switch 22 is in the ON state. However, in a cycle after the engine 10 has been activated in step S1, the process starts from the procedure in step S2 after the "END".

In the "START" in Fig. 3, the hybrid vehicle 1 is stationary (or, namely, on standby to start moving) and the key switch 22 is in the ON state. The hybrid ECU 18 executes a computer program and the regeneration control unit 30 and the electric power generation MAP 31 is implemented in the hybrid ECU 18. Then, the process goes to step S1.

In step S1, when the key switch 22 is operated to further move from the ON state to the position for activating the engine 10 (for example, is further moved from the ON state in a clockwise direction) and the engine 10 of the hybrid vehicle 1 is activated, the process goes to step S2.

In step S2, the regeneration control unit 30 determines based on the information about the operation of the post-processing forcible regeneration switch (not illustrated in the drawings) whether the post-processing forcible regeneration switch is in the ON state. When it is determined in step S2 that the post-processing forcible regeneration switch is in the ON state, the process goes to step S3. On the other hand, when it is determined in step S2 that the post-processing forcible regeneration switch is not in the ON state (or, namely, is in the OFF state), the process goes to step S18.

In step S3, the regeneration control unit 30 determines whether a value indicating the SOC of the battery 15 is less than a predetermined value. When it is determined in step S3 that the value indicating the SOC of the battery 15 is less than the predetermined value, the process goes to step S4. On the other hand, when it is determined in step S3 that the value indicating the SOC of the battery 15 is equal to or more than the predetermined value, the process goes to step S11.

In step S4, once the regeneration control unit 30 refers to the information about the amount of particulate accumulation, the process goes to step S5.

In step S5, once the regeneration control unit 30 refers to the electric power generation MAP 31, the process goes to step S6.

In step S6, the regeneration control unit 30 determines, according to the electric power generation MAP 31 referred to in step S5, the rotational speed and electric power generation torque of the engine 10 corresponding to the amount of particulate accumulation obtained from the information about the amount of particulate accumulation referred to in step S4. The regeneration control unit 30 instructs the engine 10 to rotate, setting the determined rotational speed and electric power generation torque of the engine 10 as a target value. Then, the process goes to step S7.

Here, the electric power generation MAP 31 will be described with reference to Fig. 4. The electric power generation MAP 31 is information that records the rotational speed and/or electric power generation torque of the engine 10 when the post-processing device 20 is regenerated corresponding to the amount of particulate accumulation on the post-processing device 20. In the example of Fig. 4, the electric power generation MAP 31 shows the engine rotational speed on the horizontal axis and shows the electric power generation torque on the vertical axis. The electric power generation torque is required by the engine 10 to rotate the electric motor 13 as an electric power generator. The filled circles A, B, C, and D in Fig. 4 show the amounts of particulate accumulation and become larger in the order of A < B < C < D. For example, when the amount of accumulation is A (g:gram), the engine rotational speed is a (rpm:round per minute) and the electric power generation torque is A (Nm:newton-meter). Similarly, when the amount of accumulation is D (g), the engine rotational speed is d (rpm) and the electric power generation torque is D (Nm). Incidentally, a < d, and A < D are set. The engine ECU 11 regulates the amount of the fuel injection of the engine 10 in order to implement the engine rotational speed and electric power generation torque in the engine 10 that have been instructed from the regeneration control unit 30. The engine 10 is controlled to operate under higher load as the amount of accumulation becomes larger. Incidentally, the four amounts of accumulation A, B, C, and D in Fig. 4 are examples and various amounts of accumulation can further be set at arbitrary numbers.

In step S7, the engine ECU 11 starts a regeneration mode on the engine 10 side and the process goes to step S8. Incidentally, the regeneration mode on the engine 10 side means that the engine 10 operates with the engine rotational speed and electric power generation torque instructed by the engine ECU 11 in step S6.

In step S8, the electric motor 13 starts generating electric power with the output of the engine 10 and the process goes to step S9.

In step S9, the regeneration control unit 30 determines whether the regeneration has been completed. When it is determined in step S9 that the regeneration has been completed, the process goes to step S15. On the other hand, when it is determined in step S9 that the regeneration has not been completed yet, the process goes to step S10.

In step S10, the regeneration control unit 30 determines whether the value indicating the SOC of the battery 15 is less than a predetermined value. When it is determined in step S10 that the value indicating the SOC of the battery 15 is less than the predetermined value, the process goes back to step S8. On the other hand, when it is determined in step S10 that the value indicating the SOC of the battery 15 is equal to or more than the predetermined value, the process goes to step S17.

In step S11, the regeneration control unit 30 gives the instruction to the engine ECU 11 in order to operate the exhaust brake 21 and the process goes to step S12.

In step S12, the regeneration control unit 30 gives the instruction to the engine ECU 11 in order to start a conventional normal regeneration mode on the engine 10 side and the process goes to step S13. Incidentally, the conventional normal regeneration mode means that the engine 10 operates under high load while the exhaust brake 21 operates.

In step S13, the regeneration control unit 30 determines whether the regeneration has been completed. When it is determined in step S13 that the regeneration has been completed, the process goes to step S14. On the other hand, when it is determined in step S13 that the regeneration has not been completed yet, the process goes back to step S12.

In step S14, the regeneration control unit 30 gives the instruction to the engine ECU 11 in order to set the engine 10 at the normal mode and the process goes to step S18. Incidentally, the normal mode means operating the engine 10 on standby to start moving and at the idling rotational speed.

In step S15, the regeneration control unit 30 gives the instruction to the electric motor ECU 17 in order to stop the electric motor 13 from generating electric power and the process goes to step S16.

In step S16, the regeneration control unit 30 gives the instruction to the engine ECU 11 in order to set the engine 10 at the above-mentioned normal mode and the process goes to step S18.

In step S17, the regeneration control unit 30 gives the instruction to the electric motor ECU 17 in order to stop the electric motor 13 from generating electric power and the process goes to step S11.

In step S18, the regeneration control unit 30 completes a cycle of the process while keeping the engine 10 on standby to start moving at the idling rotational speed (END). Incidentally, the next cycle of the process is started from step S2 because the engine 10 has been activated in step S1.

### {Effects}

In a stationary hybrid vehicle 1, the electric motor 13 generates electric power using the output of the engine 10 during the regeneration of the post-processing device 20. Accordingly, the output of the engine 10 during the regeneration is converted into electric power and can efficiently be used. Incidentally, when the value indicating the SOC of the battery 15 is high, the regeneration is performed while the exhaust brake 21 is operated as before. Thus, the regeneration can be performed even if the value indicating the SOC of the battery 15 is high.

Further, using the electric power generation MAP 31 can increase the rotational speed of the engine 10 and the electric power generation torque for the electric motor 13 in response to the increase in the amount of particulate accumulation. This can minimize a predetermined period of the time required for the regeneration even if the amount of accumulation increases. Further, using the electric power generation MAP 31 can keep the rotational speed of the engine 10 and the electric power generation torque for the electric motor 13 low when the amount of particulate accumulation is low. This can minimize the fuel consumption required for the regeneration when the amount of particulate accumulation is low.

### {Other embodiment}

The regeneration is performed while the exhaust brake 21 is operated when the value indicating the SOC is high and the electric motor 13 cannot generate electric power during the regeneration in the above-mentioned description of the embodiment. However, when the regeneration time needs to be shortened, the regeneration can be performed while the electric motor 13 generates electric power and the exhaust brake 21 is operated. The embodiment of such a case will be described with reference to the flowchart in Fig. 5. Steps S20, S21, S22, and S23 will mainly be described because steps S20, S21, S22, and S23 in the flowchart illustrated in Fig. 5 differ from the steps in the flowchart illustrated in Fig. 3. Incidentally, a regeneration control unit 30A implements the process of the flowchart in Fig. 5 in the description. Further, "a threshold B < a threshold A" is set in the flowchart of Fig. 5.

In step S20, the regeneration control unit 30A determines whether a value indicating the SOC is less than the threshold B. When it is determined in step S20 that the value indicating the SOC is less than the threshold B, the process goes to step S4. On the other hand, when it is determined in step S20 that the value indicating the SOC is equal to or more than the threshold B, the process goes to step S22.

In step S21, the regeneration control unit 30A determines whether the value indicating the SOC is less than the threshold A. When it is determined in step S21 that the value indicating the SOC is less than the threshold A, the process goes back to step S8. On the other hand, when it is determined in step S21 that the value indicating the SOC is equal to or more than the threshold A, the process goes to step S17.

In step S22, the regeneration control unit 30A determines whether the value indicating the SOC is less than the threshold A. When it is determined in step S22 that the value indicating the SOC is less than the threshold A, the process goes to step S23. On the other hand, when it is determined in step S22 that the value indicating the SOC is equal to or more than the threshold A, the process goes to step S11.

In step S23, the regeneration control unit 30A gives the instruction to the engine ECU 11 in order to operate the exhaust brake 21 and the process goes to step S4.

According to the process of the flowchart in Fig. 5, the value indicating the SOC of the battery 15 that is less than the threshold B means that the value indicating the SOC is relatively low, so that the regeneration is performed while the regenerative power generation of the electric motor 13 is used as the load on the engine 10. On the other hand, the value indicating the SOC of the battery 15 that is equal to or more than the threshold A means that the value indicating the SOC is relatively high, so that the regeneration is performed while the exhaust brake is used as the load on the engine 10. This process is the same as the process of the flowchart in Fig. 3. According to the process of the flowchart in Fig. 5, as another process for the case in which the value indicating the SOC is equal to or more than the threshold B in step S20 and the value indicating the SOC is less than the threshold A in step S22, the regeneration is performed while the exhaust brake is used as the load on the engine 10 in step S23 and the regenerative power generation of the electric motor 13 is also used as the load on the engine 10 in the procedures in and after step S4.

According to the above description, when the value indicating the SOC is between the threshold B and the threshold A, operating the engine 10 under the highest load can complete the regeneration in the shortest time while the exhaust brake is used with the regenerative power generation to increase the SOC.

Further, the exhaust brake can be used with the regenerative power generation in order to shorten the regeneration time even if the value indicating the SOC is less than the threshold B. In such a case, whether to shorten the regeneration time can be determined by giving the driver's instruction for shortening the regeneration time to the regeneration control unit 30. Alternatively, once the regeneration control unit 30 detects during the implementation of the regeneration that the regeneration has not been completed even after a predetermined time has elapsed, the regeneration time can be shortened.

Further, when the battery 15 or the inverter 14 has a high temperature, the regeneration can be prevented and the exhaust brake can be used because the implementation of the regeneration causes the temperature of the battery 15 or the inverter 14 to become higher.

Further, in the above-described example of the embodiment, the regeneration control unit 30 sets, based on the electric power generation MAP 31, both of the engine rotational speed and the electric power generation torque when the engine 10 causes the electric motor 13 to work as an electric power generator. One of the engine rotational speed and the electric power generation torque can be included as the content recorded in the electric power generation MAP 31 to set one of the engine rotational speed and the electric power generation torque.

For example, an experiment can find out in advance how much rotational speed the rotational speed of the electric motor 13 reaches (the rotational speed is also the engine rotational speed of the engine 10) with how much electric power generation torque at which the engine 10 causes the electric motor 13 to operate. Only the electric power generation torque of the engine 10 can be set based on the result from such an experiment. Alternatively, only the engine rotational speed of the engine 10 for operating the electric motor 13 as an electric power generator is set so that the torque of the engine 10 is controlled to gradually increase until the rotational speed reaches the set engine rotational speed during an actual electric power generation. When the rotational speed is controlled to finally reach the set engine rotational speed, it is not necessary to set electric power generation torque at the electric power generation MAP in advance.

In the above-mentioned embodiment, the relationship between the amount of particulate accumulation of the post-processing device 20, and the rotational speed and electric power generation torque of the engine 10 when the post-processing device 20 is regenerated is exemplified as the information of the electric power generation MAP 31. However, various patterns of information can be used. For example, the information can be about a function in which the rotational speed and/or electric power generation torque of the engine 10 can be found from the amount of particulate accumulation.

Further, various recording media, for example, a memory that can externally be attached to the hybrid ECU 18, can be used although the memory 32 is a non-volatile memory inside the hybrid ECU 18 in the above-mentioned description.

Further, the values of the boundaries for determination can variously be changed, for example, the "less than" can be changed into "equal to or less than" and the "equal to or more than" can be changed into "exceeds" in the description of the flowchart in Fig. 3.

Although the engine 10 has been described as an internal combustion engine, the engine 10 can also be a heat engine including an external combustion engine.

Further, while the computer program executed by the hybrid ECU 18 is installed on the hybrid ECU 18 in advance in the above-mentioned descriptions, the computer program can be installed on the hybrid ECU 18 as a computer by attaching removable media recording the computer program (storing the program), for example, to a drive (not shown in the drawings) and storing the computer program read from the removable media in a non-volatile memory inside the hybrid ECU 18 or receiving, with a communication unit (not shown in the drawings), a computer program transmitted through a wired or wireless transmission medium and storing the computer program in a non-volatile memory inside the hybrid ECU 18.

Further, each ECU can be implemented by an ECU combining some or all of the functions of the ECUs. Alternatively, an ECU can newly be provided by the further subdivision of the function of each ECU.

Incidentally, the computer program executed by the computer can be for performing the process in chronological order according to the order described herein or can be for performing the process in parallel or at the necessary timing, for example, when the computer program is invoked.

Further, the embodiments of the present invention are not limited to the above-mentioned embodiment, and can variously be modified without departing from the gist of the invention.

### {Reference Signs List}

1: Hybrid vehicle
10: Engine
11: Engine ECU
12: Clutch
13: Electric motor
14: Inverter
15: Battery
16: Transmission
17: Electric motor ECU
18: Hybrid ECU (Regeneration control device)
19: Wheel
20: Post-processing device
21: Exhaust brake
30: Regeneration control unit (Regeneration control means)
31: Electric power generation MAP (Information)
32: Memory (means for retaining information)

## Claims

1. A regeneration control device of a post-processing device in a hybrid vehicle that includes an engine, an electric motor, and a battery configured to supply electric power to the electric motor, that is capable of running by the engine or the electric motor or capable of running by cooperation between the engine and the electric motor, that is capable of performing regenerative power generation by operating the electric motor as an electric power generator using the engine in order to charge the battery, and that includes the post-processing device for exhaust gas, the regeneration control device comprising:
regeneration control means for causing the engine to operate under high load by operating the electric motor as an electric power generator using the engine during regeneration of the post-processing device while the hybrid vehicle is stationary; and
means for retaining information recording a rotational speed and/or electric power generation torque of the engine when the post-processing device is regenerated, the rotational speed and/or electric power generation torque corresponding to an amount of particulate accumulation of the post-processing device,
wherein, when the post-processing device is regenerated while the hybrid vehicle is stationary, the regeneration control means determines, based on the information, the rotational speed and/or electric power generation torque of the engine corresponding to the amount of particulate accumulation of the post-processing device when the engine causes the electric motor to operate as an electric power generator.

2. The regeneration control device according to claim 1,
wherein the regeneration control means stops the electric motor from generating electric power and operates an exhaust brake when a value indicating a state of charge of the battery is equal to or more than a predetermined value, or exceeds the predetermined value.

3. A hybrid vehicle comprising the regeneration control device according to claim 1 or 2.

4. A regeneration control method of a post-processing device in a hybrid vehicle that includes an engine, an electric motor and a battery configured to supply electric power to the electric motor, that is capable of running by the engine or the electric motor or capable of running by a cooperation between the engine and the electric motor, that is capable of performing regenerative power generation by operating the electric motor as an electric power generator using the engine in order to charge the battery, and that includes the post-processing device for exhaust gas, the regeneration control method comprising:
a regeneration control step for causing the engine to operate under high load by operating the electric motor as an electric power generator using the engine during regeneration of the post-processing device while the hybrid vehicle is stationary,
wherein the regeneration control step includes a step for determining, when the post-processing device is regenerated while the hybrid vehicle is stationary, a rotational speed and/or electric power generation torque of the engine corresponding to an amount of particulate accumulation of the post-processing device when the engine causes the electric motor to operate as an electric power generator based on information recording a rotational speed and/or electric power generation torque of the engine corresponding to the amount of particulate accumulation of the post-processing device when the post-processing device is regenerated.

5. The regeneration control method according to claim 4,
wherein the regeneration control step includes a step for stopping the electric motor from generating electric power and for operating an exhaust brake when a value indicating a state of charge of the battery is equal to or more than a predetermined value, or exceeds the predetermined value.

6. A computer program for causing an information processing apparatus to implement a function equivalent to a function of the regeneration control device according to claim 1 or 2.
